# EUROPÄISCHE PATENTSCHRIFT

(11) **EP 4 530 098 B1**
(45) Veröffentlichungstag und Bekanntmachung des Hinweises auf die Patenterteilung: **25.02.2026**
(21) Anmeldenummer: 24200673.2
(22) Anmeldetag: 17.09.2024
(51) Int. Cl.: B60C 9/22, B60C 19/08

(54) **FAHRZEUGREIFEN**
VEHICLE TYRE
BANDAGE PNEUMATIQUE POUR VÉHICULES

(30) Priorität: 26.09.2023 DE 102023209375
(43) Veröffentlichungstag der Anmeldung: 02.04.2025
(73) Patentinhaber: Continental Reifen Deutschland GmbH, 30175 Hannover (DE)
(72) Erfinder: Wieting, Steffen Julius, 30175 Hannover (DE); Francke, Martin, 30175 Hannover (DE)
(74) Vertreter: Continental Corporation

(56) Entgegenhaltungen:
- DE-A1- 102015 225 149
- DE-A1- 102015 225 154
- JP-A- 2014 015 094
- JP-A- 2016 033 000

## Beschreibung

Die Erfindung betrifft einen Fahrzeugreifen mit einem Laufstreifen, einem Gürtelverband mit einer radial innersten und einer radial äußersten Gürtellage, einer als Spulbandage ausgeführten Gürtelbandage mit einer einzigen oder mehreren Bandagelage(n) aus Bandagewindungen und mit einer elektrisch nicht leitenden Bandagegummierung, wobei der Laufstreifen in radialer Richtung, welche, im Reifenquerschnitt betrachtet, die parallel zur Reifenäquatorialebene verlaufende Richtung ist, von zumindest einem elektrisch leitenden Laufstreifenelement durchsetzt ist,
wobei zumindest eine elektrisch leitende Gürtelpassage und eine diese kontaktierende, bei auf einer Felge montierten Fahrzeugreifen in elektrisch leitender Verbindung mit der Felge stehende, elektrisch leitende Seitenwandpassage vorgesehen sind,
wobei das elektrisch leitende Laufstreifenelement mit der elektrisch leitenden Gürtelpassage durch zumindest eine durch die Gürtelbandage in radialer Richtung durchgeführte, fadenfreie, elektrisch leitende Materialpassage verbunden ist, welche einen zwischen der radial äußersten Gürtellage und der Gürtelbandage verlaufenden, radial inneren Passageabschnitt, einen an der radialen Außenseite der Gürtelbandage verlaufenden, das elektrisch leitende Laufstreifenelement kontaktierenden, radial äußeren Passageabschnitt und zumindest einen zwischen benachbarten Bandagewindungen in radialer Richtung durchgeführten Passageabschnitt aufweist,
wobei eine elektrisch leitende Passage bzw. ein elektrisch leitendes Laufstreifenelement eine solche bzw. ein solches ist, welches bzw. welche einen spezifischen elektrischen Widerstand von ≤ 10⁸ Ohm cm aufweist, wobei die elektrisch leitende Materialpassage - bei einer Gürtelbandage mit einer einzigen Bandagelage bezogen auf die einzige Bandagelage und bei einer Gürtelbandage mit mehreren Bandagelagen bezogen auf jede Bandagelage - in radialer Richtung zumindest abschnittsweise übereinander verlaufende, durch eine oder mehrere Bandagewindung(en) der bzw. der jeweiligen Bandagelage voneinander getrennte Passageabschnitte aufweist, welche durch einen einzigen in radialer Richtung durchgeführten Passageabschnitt verbunden sind.

Ein derartiger Fahrzeugreifen ist beispielsweise aus der JP 2016 033 000 A bekannt. Dieser Fahrzeugreifen weist einen Laufstreifen, einen Gürtelverband mit zwei Gürtellagen und einer als Spulbandage ausgeführten Gürtelbandage mit einer elektrisch nicht leitenden Bandagegummierung auf. Der Laufstreifen ist in radialer Richtung von einem elektrisch leitenden Laufstreifenelement durchsetzt. Durch die Gürtelbandage ist in radialer Richtung eine elektrisch leitende Materialpassage durchgeführt, welche mit dem elektrisch leitenden Laufstreifenelement in Kontakt steht und beispielsweise ein Gummistreifen aus einem elektrisch leitenden Gummimaterial ist. Der Gummistreifen ist gemäß einer Ausführung, im Querschnitt betrachtet, liegende U-förmig ausgeführt und weist einen zwischen der radial äußersten Gürtellage und der Gürtelbandage verlaufenden, radial inneren Streifenabschnitt, einen an der radialen Außenseite der Gürtelbandage verlaufenden, das elektrisch leitende Laufstreifenelement kontaktierenden, radial äußeren Streifenabschnitt und einen zwischen benachbarten Bandagewindungen in radialer Richtung durchgeführten Streifenabschnitt auf.

Ferner ist aus der DE 10 2015 225 149 A1 ein Fahrzeugreifen mit einem Laufstreifen, einem Gürtelverband und einer als Spulbandage ausgeführten Gürtelbandage bekannt. Die Gürtellagen des Gürtelverbands weisen eine elektrisch leitende Gürtelgummierung auf, welche eine elektrisch leitende Gürtelpassage bildet. Die Gürtelbandage weist eine elektrisch nicht leitende Bandagegummierung auf. Durch die Gürtelbandage ist eine elektrisch leitende Materialpassage durchgeführt, welche ein elektrisch leitendes Laufstreifenelement mit der radial äußersten Gürtellage verbindet, wobei die elektrisch leitende Materialpassage beispielsweise ein elektrisch leitender Gummistreifen, eine aufgesprühte oder aufgestrichene eklektische leitende Paste oder Sprühlösung oder ein elektrisch leitendes Pulver oder Granulat ist. Bei einem der beschriebenen Ausführungsbeispiele ist ein elektrisch leitender, im Reifenquerschnitt langgestreckt S-förmig verlaufender Gummistreifen mit einem zwischen der radial äußersten Gürtellage und der Gürtelbandage verlaufenden, radial inneren Streifenabschnitt, einem an der radial Außenseite der Gürtelbandage verlaufenden, das elektrisch leitende Laufstreifenelement kontaktierenden, radial äußeren Streifenabschnitt und einem zwischen benachbarten Bandagewindungen in radialer Richtung durchgeführten Streifenabschnitt vorgesehen. Der Reifen soll einen geringen Rollwiderstand aufweisen.

Aus der EP 3 181 379 A1 ist ein Fahrzeugreifen mit Gürtellagen mit einer elektrisch nicht leitenden Gürtelgummierung und einer Gürtelbandage mit einer elektrisch nicht leitenden Bandagegummierung bekannt. Der Laufstreifen ist in radialer Richtung von zumindest einem elektrisch leitenden Laufstreifenelement durchsetzt. Beim beschriebenen Ausführungsbeispiel verläuft auf der radial äußeren Gürtellage ein elektrisch leitender Gummistreifen, welcher eine elektrisch leitende Gürtelpassage bildet. Ferner ist durch die Gürtelbandage ein elektrisch leitender Gummistreifen durchgeführt, welcher eine elektrisch leitende Materialpassage bildet, die das elektrisch leitende Laufstreifenelement mit der elektrisch leitenden Gürtelpassage verbindet. Bei einem der beschriebenen Ausführungsbeispiele ist der Gummistreifen langgestreckt S-förmig und weist daher entsprechende Streifenabschnitte auf. Der Reifen soll unter Aufrechterhaltung eines Ableitwegs einen geringen Rollwiderstand aufweisen.

Ferner ist aus der DE 10 2015 225 601 A1 ein Fahrzeugreifen mit einer Gürtelbandage bekannt, welche eine elektrisch nicht leitende Bandagegummierung aufweist, wobei die Gürtelbandage mit elektrisch leitenden Fäden versehen ist, welche auf der Innenseite einer streifenförmigen Bandagewindung verlaufende Fadenabschnitte, auf der Außenseite einer streifenförmigen Bandagewindung verlaufende Fadenabschnitte und zwischen benachbarten streifenförmigen Bandagewindungen verlaufende, die Gürtelbandage in radialer Richtung durchsetzende Fadenabschnitte aufweisen.

Bei Fahrzeugreifen der eingangs genannten Art ist durch den Verzicht auf Fäden bei der durch die Gürtelbandage in radialer Richtung durchgeführten, elektrisch leitenden Materialpassage weiter an Gewicht eingespart, was für den Rollwiderstand des Reifens günstig ist.

Der Erfindung liegt die Aufgabe zugrunde, bei einem Fahrzeugreifen der eingangs genannten Art die Dauerhaltbarkeit und Zuverlässigkeit der durch die Gürtelbandage in radialer Richtung durchgeführten, fadenfreien, elektrisch leitenden Materialpassage unter Einsatz von möglichst wenig elektrisch leitendem Material weiter zu verbessern.

Gelöst wird die gestellte Aufgabe erfindungsgemäß dadurch, dass die Gürtelbandage aus zumindest zwei in radialer Richtung aufeinander liegenden, insbesondere Stoß an Stoß gespulten Bandagelagen gebildet ist, welche, im Reifenquerschnitt betrachtet, jeweils streifenförmige Bandagewindungen aufweisen, wobei die streifenförmigen Bandagewindungen der Bandagelagen in axialer Richtung zueinander versetzt sind und wobei die elektrisch leitende Materialpassage, im Reifenquerschnitt betrachtet, eine asymmetrisch verzerrte, liegend mehrfach H-förmige Gestalt aufweist und aus einem einen ersten H-Längsbalken bildenden, radial inneren Passageabschnitt, einem einen zweiten H-Längsbalken bildenden, radial äußeren Passageabschnitt, einem einen dritten H-Längsbalken bildenden, mittigen Passageabschnitt und zwei je einen H-Querbalken bildende, in axialer Richtung zueinander versetzt verlaufende, durchgeführte Passageabschnitte gebildet ist.

Alternativ wird die gestellte Aufgabe erfindungsgemäß dadurch gelöst, dass die Gürtelbandage aus einer einzigen, geschindelt gespulten Bandagelage gebildet ist, wobei die elektrisch leitende Materialpassage, im Reifenquerschnitt betrachtet, eine liegend Z-förmige Gestalt aufweist oder abschnittsweise liegend Z-förmig ausgeführt ist, sodass der radial innere Passageabschnitt den einen Z-Querbalken, der radial äußere Passageabschnitt den anderen Z-Querbalken und der durchgeführte Passageabschnitt den mittleren Z-Balken bildet, wobei der radial innere Passageabschnitt und der radial äußere Passageabschnitt jeweils zumindest zwei, vorzugsweise zumindest drei, besonders bevorzugt genau drei, an genau einer Seite nicht von einer benachbarten Bandagewindung überlappte Endabschnitte der Bandagewindungen kontaktiert.

Die elektrisch leitende Materialpassage umläuft die bzw. die jeweiligen Bandagewindung(en) derart abschnittsweise, dass die bzw. die jeweiligen Bandagewindung(en) von der Materialpassage ausschließlich einseitig eingefasst ist, wodurch eine dauerhaltbare und besonders zuverlässige Materialpassage mit besonders wenig elektrisch leitendem Material gebildet ist.

Mittels der ersten Lösung lässt sich bei einer mehrlagig ausgeführten Gürtelbandage eine besonders zuverlässige elektrisch leitende Materialpassage auf einfache Weise realisieren.

Die zweite Lösung ist durch eine hohe Dauerhaltbarkeit bei geringem Materialaufwand gekennzeichnet.

Gemäß einer bevorzugten Ausführung der ersten Alternativlösung ist vorgesehen, dass der radial innere Passageabschnitt, der radial äußere Passageabschnitt und der mittige Passageabschnitt an dieselben benachbarten streifenförmigen Bandagewindungen jeder Bandagelage, insbesondere an genau zwei benachbarte streifenförmige Bandagewindungen jeder Bandagelage, angrenzen.

Gemäß einer bevorzugten Ausführung der zweiten Alternativlösung ist vorgesehen, dass die elektrisch leitende Materialpassage abschnittsweise liegend Z-förmig ausgeführt ist und, im Reifenquerschnitt betrachtet, zwei zusätzliche Passageabschnitte aufweist, wobei der eine zusätzliche Passageabschnitt den radial inneren Passageabschnitt und der andere zusätzliche Passageabschnitt den radial äußeren Passageabschnitt kontaktiert, wobei die zusätzlichen Passageabschnitte an verschiedenen Seiten des den mittleren Z-Balken bildenden, durchgeführten Passageabschnitts verlaufen, von diesem durch die jeweils angrenzende Bandagewindung getrennt sind und im Bereich zwischen den jeweiligen benachbarten Bandagewindungen enden. Diese Ausführung sorgt für eine besonders zuverlässige elektrische Ableitung.

Bei sämtlichen Ausführungen weisen besonders haltbare elektrisch leitende Materialpassagen, im Reifenquerschnitt betrachtet, jeweils eine in axialer Richtung ermittelte maximale Breite von 5,00 mm bis 40,00 mm, insbesondere von 10,00 mm bis 20,00 mm, auf.

Weitere Merkmale, Vorteile und Einzelheiten der Erfindung werden nun anhand der Zeichnung, die schematisch Ausführungsbeispiele zeigt, näher beschrieben. Dabei zeigen
Fig. 1 einen Teilquerschnitt durch einen Fahrzeugluftreifen mit einem nicht unter den Schutzumfang der Ansprüche fallenden, ersten Ausführungsbeispiel,
Fig. 1a einen vergrößerten, schematischen Querschnitt durch eine Gürtelbandage des Fahrzeugluftreifens aus Fig. 1,
Fig. 2 einen vergrößerten, schematischen Querschnitt durch eine Gürtelbandage mit einem nicht unter den Schutzumfang der Ansprüche fallenden, zweiten Ausführungsbeispiel,
Fig. 3 einen vergrößerten, schematischen Querschnitt durch eine Gürtelbandage mit einem nicht unter den Schutzumfang der Ansprüche fallenden, dritten Ausführungsbeispiel,
Fig. 4 einen vergrößerten, schematischen Querschnitt durch eine Gürtelbandage mit einem vierten Ausführungsbeispiel,
Fig. 5 einen vergrößerten, schematischen Querschnitt durch eine Gürtelbandage mit einem fünften Ausführungsbeispiel und
Fig. 6 einen vergrößerten, schematischen Querschnitt durch eine Gürtelbandage mit einem sechsten Ausführungsbeispiel.

Gemäß der Erfindung ausgeführte Fahrzeugreifen sind Reifen für Personenkraftwagen (PKWs), Vans (Transporter) oder SUVs sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 16 Zoll bis 23 Zoll.

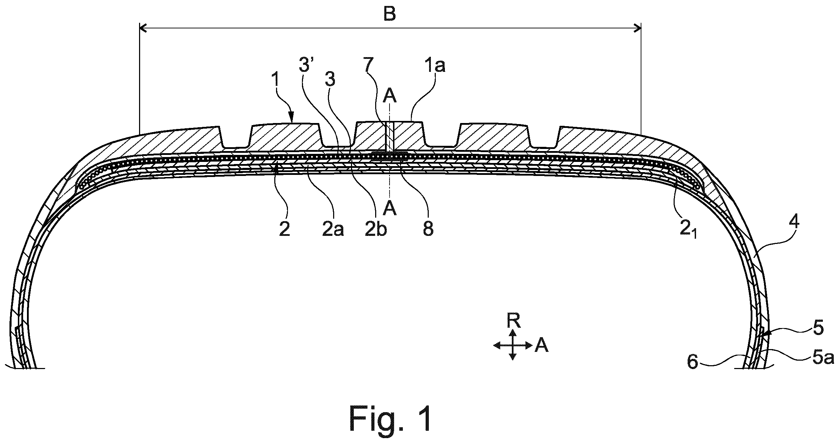

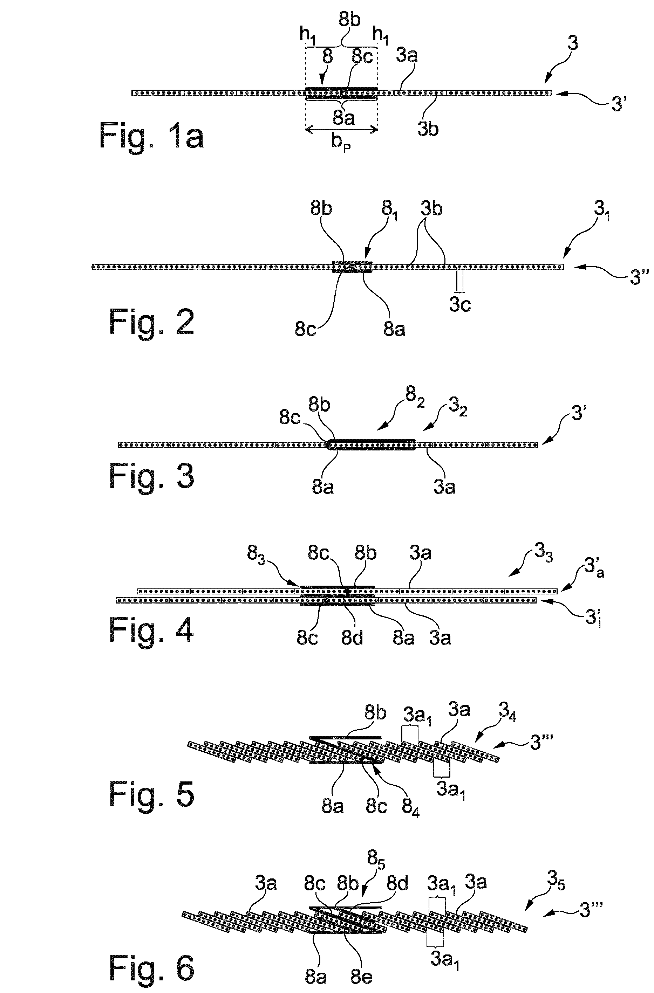

Fig. 1 zeigt einen Teilquerschnitt eines Fahrzeugluftreifens, welcher ein PKW-Reifen ist. Die radiale Richtung ist durch einen Doppelpfeil R, die axiale Richtung ist durch einen Doppelpfeil A und die Reifenäquatorialebene ist durch eine Linie A-A angedeutet. Unter der "axialen Richtung" wird die senkrecht zur Reifenäquatorialebene verlaufende Richtung verstanden. Unter der "radialen Richtung" wird die im in axialer Richtung ausgerichteten Querschnitt parallel zur Reifenäquatorialebene verlaufende Richtung verstanden.

Der Fahrzeugluftreifen weist einen profilierten Laufstreifen 1, einen zweilagigen Gürtelverband 2, eine Gürtelbandage 3, Seitenwände 4, eine Karkasseinlage 5 und eine Innenschicht 6 auf. Die nicht gezeigten Wulstbereiche weisen je einen Wulstkern, einen Kernreiter und ein Hornprofil aus elektrische leitendem Gummimaterial auf und können in an sich bekannter Weise ausgeführt sein.

Der Laufstreifen 1 weist eine in der Laufstreifenperipherie liegende Außenfläche 1a sowie eine Bodenaufstandsfläche mit einer in axialer Richtung ermittelten Breite B auf, wobei die Bodenaufstandsfläche bekannter Weise dem statisch ermittelten Footprint (ermittelt mit einem auf einer Normfelge montierten Reifen, Last bei 70% der maximalen Tragfähigkeit, Innendruck 85% des Normdrucks, gemäß ETRTO-Standards) entspricht. Der Laufstreifen 1 ist beim Ausführungsbeispiel als einteiliger Laufstreifen (Monolaufstreifen) ausgeführt und besteht aus einem elektrisch nicht leitenden Gummimaterial. Im Laufstreifen 1 ist im Bereich der Bodenaufstandsfläche, beim Ausführungsbeispiel im Bereich der Reifenäquatorialebene, zumindest ein den Laufstreifen 1 in radialer Richtung durchsetzendes, sich bis zur Außenfläche 1a erstreckendes, elektrisch leitendes Laufstreifenelement 7 integriert, wobei insbesondere ein einziges Laufstreifenelement 7 in Form eines sogenannten Carbon-Center-Beams vorgesehen ist, welcher ein in Umfangsrichtung umlaufender, elektrisch leitender Gummistreifen ist. Bei mehreren Laufstreifenelementen 7 sind diese vorzugsweise derart über den Reifenumfang verteilt, dass sich beim Abrollen des Reifens jeweils zumindest eines der Laufstreifenelemente 7 in der Bodenaufstandsfläche befindet.

Die Karkasseinlage 5 verläuft zwischen dem Gürtelverband 2 und der Innenschicht 6 sowie zwischen den Seitenwänden 4 und der Innenschicht 6, ist um die nicht gezeigten Wulstkerne Karkasshochschläge 5a bildend umgeschlagen und besteht aus in einer elektrisch leitenden Karkassgummierung eingebetteten Festigkeitsträgern, sodass die Karkasseinlage 5 elektrisch leitend ist.

Die Seitenwände 4 bestehen aus einem elektrisch nicht leitenden Gummimaterial und sind daher ebenfalls elektrisch nicht leitend.

Der Gürtelverband 2 weist eine radial innere Gürtellage 2a und eine radial äußere Gürtellage 2b auf, wobei die Gürtellagen 2a, 2b jeweils Gürtelkanten 2₁ aufweisen und aus in einer elektrisch leitenden Gürtelgummierung eingebetteten, in jeder Gürtellage 2a, 2b parallel zueinander verlaufenden Festigkeitsträgern, beispielsweise aus Stahl- oder Textilkorden bekannter Konstruktion, bestehen, wobei die Festigkeitsträger der radial inneren Gürtellage 2a jene der radial äußeren Gürtellage 2b in insbesondere bekannter Weise kreuzen. Die radial innere Gürtellage 2a überragt die Gürtelkanten 2₁ der radial äußeren Gürtellage 2b beidseitig. Die Gürtellagen 2a, 2b sind - entsprechend der elektrisch leitenden Gürtelgummierung - elektrisch leitend.

Die Gürtelbandage 3 ist eine aus zumindest einem Festigkeitsträgerstreifen gebildete, einlagige Spulbandage und ist daher von einer einzigen Bandagelage 3' gebildet. Die Bandagelage 3' bedeckt die Gürtellagen 2a, 2b radial außen, verläuft über die Gürtelkanten 2₁ der beiden Gürtellagen 2a, 2b, ist aus mehreren, streifenförmigen Bandagewindungen 3a (vergl. Fig. 1a) gebildet und besteht aus in einer elektrisch nicht leitenden Bandagegummierung eingebetteten, im Allgemeinen textilen, vorzugsweise aus Nylon, Polyethylenterephthalat, Polyamid oder Aramid gefertigten, Festigkeitsträgern 3b (Fig. 1a), welche insbesondere Korde sind. Jede Bandagewindung 3a weist, im in axialer Richtung ausgerichteten Querschnitt betrachtet, mehrere benachbarte, insbesondere zumindest vier, Festigkeitsträger 3b auf (siehe Fig. 1a). Die Gürtelbandage 3, also die Bandagelage 3', ist - entsprechend der elektrisch nicht leitenden Bandagegummierung - elektrisch nicht leitend.

Das bzw. die elektrisch leitende(n) Laufstreifenelement(e) 7 ist bzw. sind mit der elektrisch leitenden, radial äußeren Gürtellage 2a durch eine einzige bzw. jeweils eine zwischen einander benachbarten Bandagewindungen 3a (Fig. 1a) in radialer Richtung durch die Gürtelbandage 3, also die Bandagelage 3', durchgeführte, fadenfreie, elektrisch leitende Materialpassage 8 verbunden. Die Materialpassage(n) 8 befindet bzw. befinden sich daher radial innerhalb des Laufstreifenelementes 7 bzw. der Laufstreifenelemente 7 und kontaktiert bzw. kontaktieren die der Gürtelbandage 3, also der Bandagelage 3', zugewandte, radial Außenseite der radial äußeren Gürtellage 2b.

Fig. 1a zeigt schematisch die Gürtelbandage 3, also die Bandagelage 3', mit der bzw. einer der Materialpassage(n) 8. Die Materialpassage 8 weist, im in axialer Richtung ausgerichteten Reifenquerschnitt betrachtet, eine liegend symmetrisch H-förmige Gestalt auf und ist aus einem radial inneren Passageabschnitt 8a, einem radial äußeren Passageabschnitt 8b und einem die Passageabschnitte 8a, 8b verbindenden, durchgeführten Passageabschnitt 8c gebildet. Der radial innere Passageabschnitt 8a verläuft im Bereich zwischen der radialen Außenseite der radial äußeren Gürtellage 2b (vergl. Fig. 1) und den radialen Innenseiten zweier benachbarter Bandagewindungen 3a. Der radial äußere Passageabschnitt 8b verläuft gegenüberliegend zum radial inneren Passageabschnitt 8a an der radialen Außenseite der zwei entsprechenden benachbarten Bandagewindungen 3a. Der Passageabschnitt 8c ist zwischen den erwähnten, benachbarten Bandagewindungen 3a in radialer Richtung durchgeführt. Die bzw. jede Materialpassage 8 weist, im Reifenquerschnitt betrachtet, eine in axialer Richtung ermittelte maximale Breite b_{P} von 5,0 mm bis 40,0 mm, insbesondere von 10,0 mm bis 20,0 mm auf, wobei die Breite b_{P} zwischen zwei in radialer Richtung verlaufenden Hilfslinien h₁ ermittelt ist, welche durch die zwei in axialer Richtung am weitesten voneinander beabstandeten Enden der Materialpassage 8 verlaufen.

Zur Bildung der Gürtelbandage 3, also die Bandagelage 3', mitsamt der Materialpassage 8 wird an einer in insbesondere bekannter Weise ausgeführten Gürtelstation ein Gürtel-Laufstreifen-Paket aufgebaut. Die Gürtelstation ist Bestandteil einer Reifenbaumaschine und umfasst eine rotierbar gelagerte Gürtelaufbautrommel mit expandier- und einfahrbaren Trommelsegmenten. Zur Bildung des Gürtel-Laufstreifen-Paktes wird zunächst eine entsprechende Gürtelbaugruppe aufgebaut. Dabei werden aus abgelängten Festigkeitsträgerbahnen die rohen (unvulkanisierten) Gürtellagen gebildet und anschließend wird bzw. werden auf die rohe, radial äußere Gürtellage ein bzw. mehrere abgelängte Festigkeitsträgerstreifen aus in einer Kautschukmischung eingebetteten, parallel zueinander verlaufen Festigkeitsträgern beispielsweise Stoß an Stoß aufgespult, wobei während des Spulprozesses mit einem parallel zur Trommelachse verfahrbaren Applikator die Materialpassage 8 erstellt und derart die rohe Gürtelbandage und damit die Gürtelbaugruppe gebildet wird. Die Bandage wird alternativ mit einer kleinen Lücke in der Größenordnung von etwa 1,00 mm oder bis zu 1,00 mm zwischen den Windungen gespult. Anschließend wird auf die Gürtelbaugruppe eine Laufstreifenbaugruppe aus einem zugeschnittenen Rohlaufstreifen aufgebracht und derart das Gürtel-Laufstreifen-Paket fertiggestellt. Der weitere Aufbau des Rohreifens erfolgt in an sich bekannter Weise.

Die Materialpassage 8 besteht beispielsweise aus elektrisch leitendem Gummimaterial. Zur Bildung einer solchen Materialpassage 8 wird beim Spulprozess mittels des erwähnten Applikators eine entsprechende Kautschukmischung, insbesondere in Form eines extrudierten Kautschukmischungsstreifens mit einer Dicke von vorzugsweise 0,5 mm bis 1,0 mm oder einer extrudierten Rundschnur mit einem Durchmesser von vorzugsweise 0,5 mm bis 1,0 mm, an die jeweilige(n) Stelle(n) aufgebracht.

Alternativ kann die Materialpassage 8 aus aufgesprühten oder aufgestrichenen elektrisch leitenden Pasten, Sprühlösungen oder Suspensionen sowie aus einem elektrisch leitenden Pulver oder Granulat gebildet sein.

Die elektrisch leitfähigen Pasten, Sprühlösungen oder Suspensionen bestehen insbesondere aus einem flüssigen Medium und darin fein verteiltem elektrisch leitfähigen Material. Das flüssige Medium kann vor allem eine üblicherweise in Laufstreifenmischungen verwendet Flüssigkeit sein, wie beispielsweise Rapsöl, MES-Öl, TDAE-Öl, RAE-Öl, paraffinisches Öl oder dergleichen. Es können ferner weitere flüssige oder niedrigschmelzende mit Kautschuk chemisch verträgliche Dispersionsmedien verwendet werden, beispielsweise hochsiedende n-Alkane und iso-Alkane oder Alkene. Auch Weichmacherester mit entsprechenden Schmelzund Siedepunkten können verwendet werden. Es kann daher das flüssige Medium von der jeweiligen Kautschukmischung nach Applikation absorbiert werden, wobei die an der Oberfläche jeweils verbleibende elektrisch leitenden Materialschicht die oben erwähnten lokalen elektrisch leitenden Materialpassage bildet. Als fein verteiltes elektrisch leitenden Material können beispielsweise eine Kautschukmischung oder Partikel, insbesondere Rußpartikel, beispielsweise Ruß N 339 oder N 121, Graphitpartikel, Kohlenstoffnanoröhren, Carbonfasern oder sonstige elektrisch leitende Nanopartikel eingesetzt werden. Der Anteil an elektrisch leitenden Partikeln beträgt beispielsweise 10 Gew.-% bis 70 Gew.-%, insbesondere 30 Gew.-% bis 50 Gew.-%.

Die beim Fahren auftretenden elektrostatischen Aufladungen werden vom Fahrzeug, insbesondere von der Karosserie, zum jeweiligen Untergrund ("Erdung") über einen Ableitweg geleitet, welcher von der Felge, dem Hornprofil, der Karkasseinlage 5, der bzw. den Materialpassage(n) 8 und dem bzw. den elektrisch leitenden Laufstreifenelement(en) 7 gebildet ist.

Fig. 2 bis Fig. 6 zeigen schematisch Gürtelbandagen 3₁ bis 3₅ mit je einer fadenfreien, elektrisch leitenden Materialpassage 8₁ bis 8₅. Die Gürtelbandagen 3₁ bis 3₅ sind Alternativen zur Gürtelbandage 3 und analog zu dieser gefertigt. Die Materialpassage 8₁ bis 8₅ weisen jeweils die erwähnte Breite b_{P} (Fig. 1a) auf. Der Spulprozess der Gürtelbandage 3₁ bis 3₅ ist auf die jeweilige Ausführung der Gürtelbandage 3₁ bis 3₅ und die jeweilige Ausführung der Materialpassage 8₁ bis 8₅ abgestimmt.

Die in Fig. 2 gezeigte Gürtelbandage 3₁ unterscheidet sich von der Gürtelbandage 3 (Fig. 1a) im Hinblick auf die Bandagelage, wobei eine Bandagelage 3" vorgesehen ist, welche durch Aufwickeln eines oder mehrerer abgelängter, von einer Kautschukmischung ummantelter, einzelner Festigkeitsträger 3b hergestellt ist, wobei der bzw. die ummantelte(n) Festigkeitsträger 3b - mit Ausnahme jenes Bereichs, in welchem die Materialpassage 8₁ vorgesehen ist - insbesondere Stoß an Stoß aufgewickelt wurden, sodass die Gürtelbandage 3₁ bzw. die Bandagelage 3" , im Reifenquerschnitt betrachtet, aus mehreren je einen einzigen Festigkeitsträger 3b aufweisenden Bandagewindungen 3c gebildet ist. Die Materialpassage 8₁ stimmt im Wesentlichen mit der Materialpassage 8 überein. Der radial innere Passageabschnitt 8a der Materialpassage 8₁ verläuft auf den radialen Innenseiten mehrerer benachbarter Bandagewindungen 3c, der radial äußere Passageabschnitt 8b verläuft auf der radialen Außenseite mehrerer benachbarter Bandagewindungen 3c und der in radialer Richtung durchgeführte Passageabschnitt 8c befindet sich zwischen zwei benachbarten Bandagewindungen 3c.

Die in Fig. 3 gezeigte Gürtelbandage 3₂ unterscheidet sich von der Gürtelbandage 3 (Fig. 1a) dadurch, dass eine Materialpassage 8₂ vorgesehen ist, wobei die Gürtelbandage 3₂ ebenfalls eine Bandagelage 3' aufweist. Die Materialpassage 8₂ weist, im in axialer Richtung ausgerichteten Reifenquerschnitt betrachtet, eine liegend symmetrische U-förmige Gestalt auf und ist aus einem den einen U-Schenkel bildenden, radial inneren Passageabschnitt 8a, einem den anderen U-Schenkel bildenden, radial äußeren Passageabschnitt 8b und einem den U-Bogen bildenden, zwischen zwei benachbarten Bandagewindungen 3a in radialer Richtung durchgeführten Passageabschnitt 8c gebildet. Der radial innere Passageabschnitt 8a und der radial äußere Passageabschnitt 8b kontaktieren jeweils zwei streifenförmige Bandagewindungen 3a.

Die in Fig. 4 gezeigte Gürtelbandage 3₃ ist in radialer Richtung zweilagig ausgeführt, weist eine radial innere Bandagelage 3'ᵢ und eine radial äußere Bandagelage 3'ₐ auf, wobei durch die Gürtelbandage 3₃ - also durch die Bandagelagen 3'ᵢ, 3'ₐ - in radialer Richtung eine elektrisch leitende Materialpassage 8₃ durchgeführt ist. Die Bandagelagen 3'ᵢ, 3'ₐ sind jeweils aus einem oder mehreren Stoß an Stoß oder alternativ mit einer kleinen Lücke in der Größenordnung von etwa oder bis zu 1,00 mm aufgewickelten Festigkeitsträgerstreifen gefertigt und weisen daher jeweils mehreren, in radialer Richtung benachbarte, streifenförmige Bandagewindungen 3a auf, wobei die streifenförmigen Bandagewindungen 3a der radial inneren Bandagelage 3'ᵢ zu den streifenförmigen Bandagewindungen 3a der radial äußeren Bandagelage 3'ₐ versetzt sind. Die Materialpassage 8₃ weist, im in axialer Richtung ausgerichteten Reifenquerschnitt betrachtet, eine asymmetrisch verzerrte, liegend doppelt H-förmige Gestalt auf und ist aus einem radial inneren Passageabschnitt 8a, einem radial äußeren Passageabschnitt 8b, einem mittigen Passageabschnitt 8d und zwei durchgeführten Passageabschnitten 8c gebildet. Der radial innere Passageabschnitt 8a steht in Kontakt mit der radialen Innenseite der radial inneren Bandagelage 3'ᵢ. Der radial äußere Passageabschnitt 8b steht in Kontakt mit der radialen Außenseite der radial äußeren Bandagelage 3'ₐ. Der mittige Passageabschnitt 8d verläuft zwischen der radial inneren Bandagelage 3'ᵢ und der radial äußeren Bandagelage 3'ₐ. Der eine durchgeführte Passageabschnitt 8c ist zwischen zwei benachbarten Bandagewindungen 3a der radial inneren Bandagelage 3'ᵢ durchgeführt und verbindet den radial inneren Passageabschnitt 8a mit dem mittige Passageabschnitt 8d. Der weitere durchgeführte Passageabschnitt 8c ist zwischen zwei benachbarten Bandagewindungen 3a der radial äußeren Bandagelage 3'ₐ durchgeführt und verbindet den radial äußeren Passageabschnitt 8b mit dem mittigen Passageabschnitt 8d.

Die in Fig. 5 und Fig. 6 gezeigte Gürtelbandage 3₄ (Fig. 5), 3₅ (Fig. 6) ist einlagig geschindelt gespult und daher von einer einzigen, geschindelten Bandagelage 3‴ gebildet. Entsprechend der geschindelten Ausführung verlaufen einander unmittelbar benachbarte, streifenförmige Bandagewindungen 3a derart unter gegenseitiger, abschnittsweiser Überlappung, dass jede Bandagewindung 3a, im Reifenquerschnitt betrachtet, mit der zuvor gespulten Bandagewindung 3a überlappt und zwei je an genau einer Seite nicht von einer benachbarten Bandagewindung 3a überlappte Endabschnitte 3a₁ aufweist.

Bei der Gürtelbandage 3₄ (Fig. 5) weist die zugehörige Materialpassage 8₄, im in axialer Richtung ausgerichteten Reifenquerschnitt betrachtet, eine Z-förmige Gestalt auf und ist aus einem den einen Z-Querbalken bildenden, radial inneren Passageabschnitt 8a, einem den anderen Z-Querbalken bildenden, radial äußeren Passageabschnitt 8b und einem den mittleren Z-Balken bildenden, zwischen zwei Bandagewindungen 3a durchgeführten Passageabschnitt 8c gebildet. Der radial inneren Passageabschnitt 8a und der radial äußere Passageabschnitt 8b kontaktieren jeweils zumindest zwei, vorzugswese zumindest drei, besonders bevorzugt genau drei, Endabschnitte 3a₁.

Bei der Gürtelbandage 3₅ (Fig. 6) ist eine Materialpassage 8₅ vorgesehen, welche sich von der Materialpassage 8₄ dadurch unterscheidet, dass, im in axialer Richtung ausgerichteten Reifenquerschnitt betrachtet, zwei zusätzliche Passageabschnitte 8e vorgesehen sind. Der eine zusätzlich Passageabschnitt 8e kontaktiert den radial inneren Passageabschnitt 8a und der andere zusätzlich Passageabschnitt 8e kontaktiert den radial äußeren Passageabschnitt 8b, wobei die zusätzlichen Passageabschnitte 8e an verschiedenen Seiten des den mittleren Z-Balken bildenden, durchgeführten Passageabschnitts 8c verlaufen, von diesem durch die jeweils angrenzende Bandagewindung 3a getrennt sind und im Bereich zwischen den jeweils beiden Bandagewindungen 3a enden.

Die Erfindung ist auf die beschriebenen Ausführungsbeispiele nicht beschränkt.

Der Laufstreifen kann in radialer Richtung mehrschichtig und/oder in axialer Richtung mehrteilig ausgeführt sein.

Die Gürtellage kann mehr als zwei Gürtellagen aufweisen.

Die Gürtelbandage kann, im Reifenquerschnitt betrachtet, auch nur abschnittsweise mehrlagig ausgebildet sein. Die Gürtelbandage bedeckt die Gürtellagen bzw. den Gürtelverband zumindest abschnittsweise.

Beim den beschriebenen Ausführungsbeispielen bilden die Gürtellagen 2a, 2b aufgrund ihrer elektrisch leitenden Gürtelgummierung eine elektrisch leitende Gürtelpassage, welche die durch die Gürtelbandage 3, 3₁, 3₂, 3₃, 3₄, 3₅ in radialer Richtung durchgeführte(n) fadenfreie(n), elektrisch leitende(n) Materialpassage(n) 8, 8₁, 8₂, 8₃, 8₄, 8₅ kontaktiert.

Die elektrisch leitende Gürtelpassage kann beispielsweise durch einen elektrisch leitenden Faden oder mehrere elektrisch leitende Fäden oder entsprechend aufgebrachte elektrisch leitende Suspensionen oder dergleichen realisiert werden.

Bei den beschriebenen Ausführungsbeispielen bildet die elektrisch leitende Karkasseinlage 5 gemeinsam mit dem jeweiligen Hornprofil im Bereich der Seitenwand 4 eine elektrisch leitende Seitenwandpassage, welche bei auf der Felge montierten Fahrzeugreifen in elektrisch leitender Verbindung mit der Felge steht und die elektrisch leitende Gürtelpassage kontaktiert.

Die Karkassgummierung und/oder die Hornprofile können aus elektrisch nicht leitendem Gummimaterial bestehen. Die elektrisch leitende Seitenwandpassage ist bei diesen Ausführungen beispielsweise durch weitere elektrisch leitende Fäden, welche auf der Karkasseinlage und/oder auf der Innenseite der Seitenwand und des Hornprofils aufgebracht sind, wie es beispielsweise aus der DE 10 2010 017 444 A1 bzw. der WO 2017/088994 A1 bekannt ist, realisiert. Die elektrisch leitende Seitenwandpassage kann ferner von einer im Zuge der Reifenfertigung aufgebrachten elektrisch leitenden Suspension gebildet sein, wie sie etwa aus der EP 3 103 661 B1 bekannt ist. Es ist in zumindest einem Seitenwandbereich zumindest eine elektrisch leitenden Seitenwandpassage vorgesehen.

Anstelle eines elektrisch leitenden Hornprofils ist es beispielsweise möglich, an der Außenseite eines elektrisch nicht leitenden Hornprofils elektrisch leitendes Material vorzusehen, so wie es beispielsweise aus der DE 10 2015 255 150 A1 bekannt ist. Das elektrisch leitende Material ist dabei insbesondere ein Gummistreifen, ein Gewebe, ein Faden, eine aufgebrachte elektrisch leitende Paste bzw. eine leitende Suspension oder ein aufgebrachtes elektrisch leitendes Pulver oder Granulat.

Es ist daher möglich, das Gummimaterial des Laufstreifens, die Bandagegummierung, die Gürtelgummierung, die Karkassgummierung, das Gummimaterial der Seitenwände und das Gummimaterial der Hornprofile elektrisch nicht leitend auszuführen. Die diesen Gummimaterialien zugrundeliegenden Kautschukmischungen können daher vorteilhafterweise einen hohen Anteil an Kieselsäure als Füllstoff weisen, wodurch der Rollwiderstand des Reifens deutlich gesenkt wird.

Im Rahmen der gegenständlichen Erfindung wird unter einer elektrisch leitenden Beschichtung, einer elektrisch leitenden Ummantelung, einem elektrisch leitenden Trägerfaden, einem elektrisch leitenden Gummimaterial, einer elektrisch leitenden Gummierung, einem elektrisch leitenden Gummistreifen, einem elektrisch leitenden Laufstreifenelement, einer elektrisch leitenden Seitenwandpassage, einer elektrisch leitenden Gürtelpassage bzw. einer elektrisch leitende Materialpassage, einer elektrisch leitenden Paste, Sprühlösung oder Suspensionen bzw. einem elektrisch leitenden Pulver oder Granulat eine solche bzw. ein solcher bzw. ein solches verstanden, welche bzw. welcher bzw. welches einen spezifischen elektrischen Widerstand von ≤ 10⁸ Ohm˙cm aufweist. Das dem jeweiligen Bestandteil, also der Beschichtung, der Ummantelung, dem Trägerfaden, dem Gummimaterial, der Gummierung, dem Gummistreifen, dem Laufstreifenelement bzw. der Passage, jeweils zugrundeliegende Material weist im vulkanisierten Fahrzeugreifen somit einen spezifischen elektrischen Widerstand von ≤ 10⁸ Ohm˙cm auf.

### Bezugszeichenliste

- 1: Laufstreifen
- 1a: Außenfläche
- 2: Gürtelverband
- 2₁: Gürtelkante
- 2a: radial innere Gürtellage
- 2b: radial äußere Gürtellage
- 3, 3₁, 3₂, 3₃, 3₄, 3₅: Gürtelbandage
- 3': Bandagelage
- 3'ₐ: radial äußere Bandagelage
- 3'ᵢ: radial innere Bandagelage
- 3": Bandagelage
- 3‴: geschindelten Bandagelage
- 3a: Bandagewindung
- 3a₁: Endabschnitt
- 3b: Festigkeitsträger
- 3c: Bandagewindung
- 4: Seitenwand
- 5: Karkasseinlage
- 5a: Karkasshochschlag
- 6: Innenschicht
- 7: elektrisch leitendes Laufstreifenelement
- 8, 8₁, 8₂, 8₃, 8₄, 8₅: fadenfreie, elektrisch leitende Materialpassage
- 8a: radial innerer Passageabschnitt
- 8b: radial äußerer Passageabschnitt
- 8c: durchgeführter Passageabschnitt
- 8d: mittiger Passageabschnitt
- 8e: zusätzlicher Passageabschnitt

- A: Doppelpfeil (axiale Richtung)
- A-A: Linie (Reifenäquatorialebene)
- B: Breite
- b_{P}: maximale Breite
- h₁: Hilfslinie
- R: Doppelpfeil (radiale Richtung)

## Patentansprüche

1. Fahrzeugreifen mit einem Laufstreifen (1), einem Gürtelverband (2) mit einer radial innersten und einer radial äußersten Gürtellage (2a, 2b), einer als Spulbandage ausgeführten Gürtelbandage (3, 3₁, 3₂, 3₃, 3₄, 3₅) mit einer einzigen oder mehreren Bandagelage(n) (3', 3'ₐ, 3'i, 3", 3‴) aus Bandagewindungen (3a, 3c) und mit einer elektrisch nicht leitenden Bandagegummierung, wobei der Laufstreifen (1) in radialer Richtung, welche, im Reifenquerschnitt betrachtet, die parallel zur Reifenäquatorialebene (Linie A-A) verlaufende Richtung ist, von zumindest einem elektrisch leitenden Laufstreifenelement (7) durchsetzt ist,
wobei zumindest eine elektrisch leitende Gürtelpassage (2a, 2b) und eine diese kontaktierende, bei auf einer Felge montierten Fahrzeugreifen in elektrisch leitender Verbindung mit der Felge stehende, elektrisch leitende Seitenwandpassage (5) vorgesehen sind,
wobei das elektrisch leitende Laufstreifenelement (7) mit der elektrisch leitenden Gürtelpassage (2a, 2b) durch zumindest eine durch die Gürtelbandage (3, 3₁, 3₂, 3₃, 3₄, 3₅) in radialer Richtung durchgeführte, fadenfreie, elektrisch leitende Materialpassage (8, 8₁, 8₂, 8₃, 8₄, 8₅) verbunden ist, welche einen zwischen der radial äußersten Gürtellage (2b) und der Gürtelbandage (3, 3₁, 3₂, 3₃, 3₄, 3₅) verlaufenden, radial inneren Passageabschnitt (8a), einen an der radialen Außenseite der Gürtelbandage (3, 3₁, 3₂, 3₃, 3₄, 3₅) verlaufenden, das elektrisch leitende Laufstreifenelement (7) kontaktierenden, radial äußeren Passageabschnitt (8b) und zumindest einen zwischen benachbarten Bandagewindungen (3a, 3c) in radialer Richtung durchgeführten Passageabschnitt (8c) aufweist,
wobei eine elektrisch leitende Passage (2a, 2b, 8, 8₁, 8₂, 8₃, 8₄, 8₅) bzw. ein elektrisch leitendes Laufstreifenelement (7) eine solche bzw. ein solches ist, welches bzw. welche einen spezifischen elektrischen Widerstand von ≤ 10⁸ Ohm˙cm aufweist, wobei die elektrisch leitende Materialpassage (8, 8₁, 8₂, 8₃, 8₄, 8₅) - bei einer Gürtelbandage (3, 3₁, 3₂, 3₄, 3₅) mit einer einzigen Bandagelage (3', 3", 3‴) bezogen auf die einzige Bandagelage (3', 3", 3‴) und bei einer Gürtelbandage (3₃) mit mehreren Bandagelagen (3'ₐ, 3'ᵢ) bezogen auf jede Bandagelage (3'ₐ, 3'ᵢ) - in radialer Richtung zumindest abschnittsweise übereinander verlaufende, durch eine oder mehrere Bandagewindung(en) (3a, 3c) der bzw. der jeweiligen Bandagelage (3', 3'ₐ, 3'i, 3", 3‴) voneinander getrennte Passageabschnitte (8a, 8b, 8d) aufweist, welche durch einen einzigen in radialer Richtung durchgeführten Passageabschnitt (8c) verbunden sind,
**dadurch gekennzeichnet,**
**dass** die Gürtelbandage (3₃) aus zumindest zwei in radialer Richtung aufeinander liegenden, insbesondere Stoß an Stoß gespulten Bandagelagen (3'ₐ, 3'i) gebildet ist, welche, im Reifenquerschnitt betrachtet, jeweils streifenförmige Bandagewindungen (3a) aufweisen, wobei die streifenförmigen Bandagewindungen (3a) der Bandagelagen (3'ₐ, 3'i) in axialer Richtung zueinander versetzt sind und wobei die elektrisch leitende Materialpassage (8₃), im Reifenquerschnitt betrachtet, eine asymmetrisch verzerrte, liegend mehrfach H-förmige Gestalt aufweist und aus einem einen ersten H-Längsbalken bildenden, radial inneren Passageabschnitt (8a), einem einen zweiten H-Längsbalken bildenden, radial äußeren Passageabschnitt (8b), einem einen dritten H-Längsbalken bildenden, mittigen Passageabschnitt (8d) und zwei je einen H-Querbalken bildende, in axialer Richtung zueinander versetzt verlaufende, durchgeführte Passageabschnitte (8c) gebildet ist.

2. Fahrzeugreifen mit einem Laufstreifen (1), einem Gürtelverband (2) mit einer radial innersten und einer radial äußersten Gürtellage (2a, 2b), einer als Spulbandage ausgeführten Gürtelbandage (3, 3₁, 3₂, 3₃, 3₄, 3₅) mit einer einzigen oder mehreren Bandagelage(n) (3', 3'ₐ, 3'ᵢ, 3", 3‴) aus Bandagewindungen (3a, 3c) und mit einer elektrisch nicht leitenden Bandagegummierung, wobei der Laufstreifen (1) in radialer Richtung, welche, im Reifenquerschnitt betrachtet, die parallel zur Reifenäquatorialebene (Linie A-A) verlaufende Richtung ist, von zumindest einem elektrisch leitenden Laufstreifenelement (7) durchsetzt ist, wobei zumindest eine elektrisch leitende Gürtelpassage (2a, 2b) und eine diese kontaktierende, bei auf einer Felge montierten Fahrzeugreifen in elektrisch leitender Verbindung mit der Felge stehende, elektrisch leitende Seitenwandpassage (5) vorgesehen sind,
wobei das elektrisch leitende Laufstreifenelement (7) mit der elektrisch leitenden Gürtelpassage (2a, 2b) durch zumindest eine durch die Gürtelbandage (3, 3₁, 3₂, 3₃, 3₄, 3₅) in radialer Richtung durchgeführte, fadenfreie, elektrisch leitende Materialpassage (8, 8₁, 8₂, 8₃, 8₄, 8₅) verbunden ist, welche einen zwischen der radial äußersten Gürtellage (2b) und der Gürtelbandage (3, 3₁, 3₂, 3₃, 3₄, 3₅) verlaufenden, radial inneren Passageabschnitt (8a), einen an der radialen Außenseite der Gürtelbandage (3, 3₁, 3₂, 3₃, 3₄, 3₅) verlaufenden, das elektrisch leitende Laufstreifenelement (7) kontaktierenden, radial äußeren Passageabschnitt (8b) und zumindest einen zwischen benachbarten Bandagewindungen (3a, 3c) in radialer Richtung durchgeführten Passageabschnitt (8c) aufweist,
wobei eine elektrisch leitende Passage (2a, 2b, 8, 8₁, 8₂, 8₃, 8₄, 8₅) bzw. ein elektrisch leitendes Laufstreifenelement (7) eine solche bzw. ein solches ist, welches bzw. welche einen spezifischen elektrischen Widerstand von ≤ 10⁸ Ohm˙cm aufweist, wobei die elektrisch leitende Materialpassage (8, 8₁, 8₂, 8₃, 8₄, 8₅) - bei einer Gürtelbandage (3, 3₁, 3₂, 3₄, 3₅) mit einer einzigen Bandagelage (3', 3", 3‴) bezogen auf die einzige Bandagelage (3', 3", 3‴) und bei einer Gürtelbandage (3₃) mit mehreren Bandagelagen (3'ₐ, 3'ᵢ) bezogen auf jede Bandagelage (3'ₐ, 3'ᵢ) - in radialer Richtung zumindest abschnittsweise übereinander verlaufende, durch eine oder mehrere Bandagewindung(en) (3a, 3c) der bzw. der jeweiligen Bandagelage (3', 3'ₐ, 3'i, 3", 3‴) voneinander getrennte Passageabschnitte (8a, 8b, 8d) aufweist, welche durch einen einzigen in radialer Richtung durchgeführten Passageabschnitt (8c) verbunden sind,
**dadurch gekennzeichnet,**
**dass** die Gürtelbandage (3₄, 3₅) aus einer einzigen, geschindelt gespulten Bandagelage (3‴) gebildet ist, wobei die elektrisch leitende Materialpassage (8₄, 8₅), im Reifenquerschnitt betrachtet, eine liegend Z-förmige Gestalt aufweist oder abschnittsweise liegend Z-förmig ausgeführt ist, sodass der radial innere Passageabschnitt (8a) den einen Z-Querbalken, der radial äußere Passageabschnitt (8b) den anderen Z-Querbalken und der durchgeführte Passageabschnitt (8c) den mittleren Z-Balken bildet, wobei der radial innere Passageabschnitt (8a) und der radial äußere Passageabschnitt (8b) jeweils zumindest zwei, vorzugsweise zumindest drei, besonders bevorzugt genau drei, an genau einer Seite nicht von einer benachbarten Bandagewindung (3a) überlappte Endabschnitte (3a₁) der Bandagewindungen (3a) kontaktiert.

3. Fahrzeugreifen nach Anspruch 1, **dadurch gekennzeichnet, dass** der radial innere Passageabschnitt (8a), der radial äußere Passageabschnitt (8b) und der mittige Passagenabschnitt (8d) an dieselben benachbarten streifenförmigen Bandagewindungen (3a) jeder Bandagelage (3'ₐ, 3'i), insbesondere an genau zwei benachbarte streifenförmige Bandagewindungen (3a) jeder Bandagelage (3'ₐ, 3'i), angrenzen.

4. Fahrzeugreifen nach Anspruch 2, **dadurch gekennzeichnet, dass** die elektrisch leitende Materialpassage (8₅) abschnittsweise liegend Z-förmig ausgeführt ist und, im Reifenquerschnitt betrachtet, zwei zusätzliche Passageabschnitte (8e) aufweist, wobei der eine zusätzliche Passageabschnitt (8e) den radial inneren Passageabschnitt (8a) und der andere zusätzliche Passageabschnitt (8e) den radial äußeren Passageabschnitt (8b) kontaktiert, wobei die zusätzlichen Passageabschnitte (8e) an verschiedenen Seiten des den mittleren Z-Balken bildenden, durchgeführten Passageabschnitts (8c) verlaufen, von diesem durch die jeweils angrenzende Bandagewindung (3a) getrennt sind und im Bereich zwischen den jeweiligen benachbarten Bandagewindungen (3a) enden.

5. Fahrzeugreifen nach einem der Ansprüche 1 bis 4, **dadurch gekennzeichnet, dass** die elektrisch leitende Materialpassage (8₃, 8₄, 8₅), im Reifenquerschnitt betrachtet, eine in axialer Richtung ermittelte maximale Breite (b_{P}) von 5,0 mm bis 40,0 mm, insbesondere von 10,0 mm bis 20,0 mm, aufweist.

## Claims

1. Pneumatic vehicle tyre with a tread (1), a belt assembly (2) comprising a radially innermost and a radially outermost belt ply (2a, 2b), a belt bandage (3, 3₁, 3₂, 3₃, 3₄, 3₅) formed as a wound bandage and comprising one or more bandage plies (3', 3'ₐ, 3'ᵢ, 3", 3"') made up of bandage turns (3a, 3c) and comprising an electrically nonconducting bandage rubber coating, wherein the tread (1) is passed through in the radial direction, which, when viewed in cross section of the tyre, is the direction running parallel to the equatorial plane of the tyre (line A-A), by at least one electrically conductive tread element (7),
wherein at least one electrically conductive belt passage (2a, 2b) and an electrically conductive sidewall passage (5), which contacts the latter and, when the vehicle tyre is fitted on a rim, is in electrically conductive connection with the rim, are provided,
wherein the electrically conductive tread element (7) is connected to the electrically conductive belt passage (2a, 2b) by at least one filament-free, electrically conductive material passage (8, 8₁, 8₂, 8₃, 8₄, 8₅), which is led through the belt bandage (3, 3₁, 3₂, 3₃, 3₄, 3₅) in the radial direction and has a radially inner passage section (8a), which runs between the radially outermost belt ply (2b) and the belt bandage (3, 3₁, 3₂, 3₃, 3₄, 3₅), a radially outer passage section (8b), which runs on the radial outer side of the belt bandage (3, 3₁, 3₂, 3₃, 3₄, 3₅) and contacts the electrically conductive tread element (7), and at least one passage section (8c), which is led through in the radial direction between adjacent bandage turns (3a, 3c),
wherein an electrically conductive passage (2a, 2b, 8, 8₁, 8₂, 8₃, 8₄, 8₅) or an electrically conductive tread element (7) is such a passage or such an element that has an electrical resistivity of ≤ 10⁸ ohms cm, wherein the electrically conductive material passage (8, 8₁, 8₂, 8₃, 8₄, 8₅) - in the case of a belt bandage (3, 3₁, 3₂, 3₄, 3₅) with a single bandage ply (3', 3", 3‴) with respect to the single bandage ply (3', 3", 3‴) and in the case of a belt bandage (3₃) with multiple bandage plies (3'ₐ, 3'ᵢ) with respect to each bandage ply (3'ₐ, 3'ᵢ) - has passage sections (8a, 8b, 8d) which at least partly run over one another in the radial direction, are separated from one another by one or more bandage turns (3a, 3c) of the or of the respective bandage ply (3', 3'ₐ, 3'ᵢ, 3", 3‴) and are connected by a single passage section (8c) led through in the radial direction,
**characterized**
**in that** the belt bandage (3₃) is formed by at least two bandage plies (3'a, 3'i) lying one on top of the other in the radial direction, in particular wound flush against one another, which, when viewed in cross section of the tyre, have in each case strip-shaped bandage turns (3a), wherein the strip-shaped bandage turns (3a) of the bandage plies (3'a, 3'i) are offset from one another in the axial direction and wherein the electrically conductive material passage (8₃), when viewed in cross section of the tyre, has an asymmetrically distorted, horizontally multiply H-shaped form and is formed by a radially inner passage section (8a), forming a first H post, a radially outer passage section (8b), forming a second H post, a middle passage section (8d), forming a third H post, and two led-through passage sections (8c), each forming an H crossbar and running offset from one another in the axial direction.

2. Pneumatic vehicle tyre with a tread (1), a belt assembly (2) comprising a radially innermost and a radially outermost belt ply (2a, 2b), a belt bandage (3, 3₁, 3₂, 3₃, 3₄, 3₅) formed as a wound bandage and comprising one or more bandage plies (3', 3'ₐ, 3'ᵢ, 3", 3"') made up of bandage turns (3a, 3c) and comprising an electrically nonconducting bandage rubber coating, wherein the tread (1) is passed through in the radial direction, which, when viewed in cross section of the tyre, is the direction running parallel to the equatorial plane of the tyre (line A-A), by at least one electrically conductive tread element (7),
wherein at least one electrically conductive belt passage (2a, 2b) and an electrically conductive sidewall passage (5), which contacts the latter and, when the vehicle tyre is fitted on a rim, is in electrically conductive connection with the rim, are provided,
wherein the electrically conductive tread element (7) is connected to the electrically conductive belt passage (2a, 2b) by at least one filament-free, electrically conductive material passage (8, 8₁, 8₂, 8₃, 8₄, 8₅), which is led through the belt bandage (3, 3₁, 3₂, 3₃, 3₄, 3₅) in the radial direction and has a radially inner passage section (8a), which runs between the radially outermost belt ply (2b) and the belt bandage (3, 3₁, 3₂, 3₃, 3₄, 3₅), a radially outer passage section (8b), which runs on the radial outer side of the belt bandage (3, 3₁, 3₂, 3₃, 3₄, 3₅) and contacts the electrically conductive tread element (7), and at least one passage section (8c), which is led through in the radial direction between adjacent bandage turns (3a, 3c),
wherein an electrically conductive passage (2a, 2b, 8, 8₁, 8₂, 8₃, 8₄, 8₅) or an electrically conductive tread element (7) is such a passage or such an element that has an electrical resistivity of ≤ 10⁸ ohms cm, wherein the electrically conductive material passage (8, 8₁, 8₂, 8₃, 8₄, 8₅) - in the case of a belt bandage (3, 3₁, 3₂, 3₄, 3₅) with a single bandage ply (3', 3", 3‴) with respect to the single bandage ply (3', 3", 3‴) and in the case of a belt bandage (3₃) with multiple bandage plies (3'ₐ, 3'ᵢ) with respect to each bandage ply (3'ₐ, 3'ᵢ) - has passage sections (8a, 8b, 8d) which at least partly run over one another in the radial direction, are separated from one another by one or more bandage turns (3a, 3c) of the or of the respective bandage ply (3', 3'ₐ, 3'ᵢ, 3", 3‴) and are connected by a single passage section (8c) led through in the radial direction,
**characterized**
**in that** the belt bandage (3₄, 3₅) is formed by a single, overlappingly wound bandage ply (3‴), wherein the electrically conductive material passage (8₄, 8₅), when viewed in cross section of the tyre, has a horizontally Z-shaped form or is configured in some sections as horizontally Z-shaped, so that the radially inner passage section (8a) forms the one Z crossbar, the radially outer passage section (8b) forms the other Z crossbar and the led-through passage section (8c) forms the middle Z bar, wherein the radially inner passage section (8a) and the radially outer passage section (8b) contact in each case at least two, preferably at least three, particularly preferably exactly three, end sections (3a₁) of the bandage turns (3a) that are not overlapped on exactly one side by an adjacent bandage turn (3a).

3. Vehicle tyre according to Claim 1, **characterized in that** the radially inner passage section (8a), the radially outer passage section (8b) and the middle passage section (8d) adjoin the same adjacent strip-shaped bandage turns (3a) of each bandage ply (3'a, 3'i), in particular at exactly two adjacent strip-shaped bandage turns (3a) of each bandage ply (3'a, 3'i).

4. Vehicle tyre according to Claim 2, **characterized in that** the electrically conductive material passage (8₅) is configured in some sections as horizontally Z-shaped and, when viewed in cross section of the tyre, has two additional passage sections (8e),
wherein the one additional passage section (8e) contacts the radially inner passage section (8a) and the other additional passage section (8e) contacts the radially outer passage section (8b), wherein the additional passage sections (8e) run on different sides of the led-through passage section (8c) forming the middle Z bar, are separated from it by the respectively adjacent bandage turn (3a) and end in the region between the respective adjacent bandage turns (3a).

5. Vehicle tyre according to one of Claims 1 to 4, **characterized in that** the electrically conductive material passage (8₃, 8₄, 8₅), when viewed in cross section of the tyre, has a maximum width (b_{P}), determined in the axial direction, of 5.0 mm to 40.0 mm, in particular of 10.0 mm to 20.0 mm.

## Revendications

1. Pneu de véhicule, avec une bande de roulement (1), un ensemble de ceinture (2) avec une couche de ceinture radialement la plus intérieure et une couche de ceinture radialement la plus extérieure (2a, 2b), un bandage de ceinture (3, 3₁, 3₂, 3₃, 3₄, 3₅) réalisé sous forme de bandage enroulé avec une ou plusieurs couches de bandage (3', 3'ₐ, 3'ᵢ, 3", 3"') de spires de bandage (3a, 3c) et avec un gommage de ceinture non conducteur d'électricité, la bande de roulement (1) étant traversée dans la direction radiale, qui, considérée dans la section transversale du pneu, est la direction qui s'étend parallèlement au plan équatorial du pneu (ligne A-A), par au moins un élément de bande de roulement conducteur d'électricité (7), il étant prévu au moins un passage de ceinture conducteur d'électricité (2a, 2b) et un passage de paroi latérale conducteur d'électricité (5) en contact avec celui-ci, qui est en liaison conductrice d'électricité avec la jante dans le cas de pneus de véhicule montés sur une jante,
l'élément de bande de roulement conducteur d'électricité (7) étant relié au passage de ceinture conducteur d'électricité (2a, 2b) par au moins un passage de matériau conducteur d'électricité (8, 8₁, 8₂, 8₃, 8₄, 8₅) sans fil, réalisé dans la direction radiale à travers le bandage de ceinture (3, 3₁, 3₂, 3₃, 3₄, 3₅), qui présente une section de passage radialement intérieure (8a) s'étendant entre la couche de ceinture radialement la plus extérieure (2b) et le bandage de ceinture (3, 3₁, 3₂, 3₃, 3₄, 3₅), une section de passage radialement extérieure (8b) s'étendant sur le côté extérieur radial du bandage de ceinture (3, 3₁, 3₂, 3₃, 3₄, 3₅), qui est en contact avec l'élément de bande de roulement conducteur d'électricité (7), et au moins une section de passage (8c) réalisée dans la direction radiale entre des spires de bandage voisines (3a, 3c),
un passage conducteur d'électricité (2a, 2b, 8, 8₁, 8₂, 8₃, 8₄, 8₅) ou un élément de bande de roulement conducteur d'électricité (7) étant un tel passage ou élément qui présente une résistance électrique spécifique ≤ 10⁸ Ohm cm, le passage de matériau conducteur d'électricité (8, 8₁, 8₂, 8₃, 8₄, 8₅) présentent - dans le cas d'un bandage de ceinture (3, 3₁, 3₂, 3₄, 3₅) avec une seule couche de bandage (3', 3", 3"') par rapport à la seule couche de bandage (3', 3", 3"') et, dans le cas d'un bandage de ceinture (33) avec plusieurs couches de bandage (3'ₐ, 3'i) par rapport à chaque couche de bandage (3'ₐ, 3'ᵢ) - des sections de passage (8a, 8b, 8d) qui se superposent au moins par sections dans la direction radiale, qui sont séparées les unes des autres par un ou plusieurs enroulements de bandage (3a, 3c) de la ou des couches de bandage respectives (3', 3'ₐ, 3'ᵢ, 3", 3"'), qui sont reliées par une seule section de passage (8c) réalisée dans la direction radiale,
**caractérisé**
**en ce que** le bandage de ceinture (3₃) est formé d'au moins deux couches de bandage (3'a, 3'i) superposées dans la direction radiale, notamment bobinées bout à bout, qui, considérées dans la coupe transversale du pneu, présentent chacune des enroulements de bandage en forme de bandes (3a), les enroulements de bandage en forme de bandes (3a) des couches de bandage (3'a, 3'i) étant décalés les uns par rapport aux autres dans la direction axiale et le passage de matériau conducteur électrique (8₃), considéré dans la section transversale du pneu, présentant une forme asymétrique déformée, couchée, en forme de H multiple et étant formé d'une section de passage radialement intérieure (8a) formant une première barre longitudinale en H, d'une section de passage radialement extérieure (8b) formant une deuxième barre longitudinale en H, d'une section de passage centrale (8d) formant une troisième barre longitudinale en H et de deux sections de passage traversantes (8c) formant chacune une barre transversale en H, décalées l'une par rapport à l'autre dans la direction axiale.

2. Pneu de véhicule, avec une bande de roulement (1), un ensemble de ceinture (2) avec une couche de ceinture radialement la plus intérieure et une couche de ceinture radialement la plus extérieure (2a, 2b), un bandage de ceinture (3, 3₁, 3₂, 3₃, 3₄, 3₅) réalisé sous forme de bandage enroulé avec une ou plusieurs couches de bandage (3', 3'ₐ, 3'ᵢ, 3", 3"') de spires de bandage (3a, 3c) et avec un gommage de ceinture non conducteur d'électricité, la bande de roulement (1) étant traversée dans la direction radiale, qui, considérée dans la section transversale du pneu, est la direction qui s'étend parallèlement au plan équatorial du pneu (ligne A-A), par au moins un élément de bande de roulement conducteur d'électricité (7), il étant prévu au moins un passage de ceinture conducteur d'électricité (2a, 2b) et un passage de paroi latérale conducteur d'électricité (5) en contact avec celui-ci, qui est en liaison conductrice d'électricité avec la jante dans le cas de pneus de véhicule montés sur une jante,
l'élément de bande de roulement conducteur d'électricité (7) étant relié au passage de ceinture conducteur d'électricité (2a, 2b) par au moins un passage de matériau conducteur d'électricité (8, 8₁, 8₂, 8₃, 8₄, 8₅) sans fil, réalisé dans la direction radiale à travers le bandage de ceinture (3, 3₁, 3₂, 3₃, 3₄, 3₅), qui présente une section de passage radialement intérieure (8a) s'étendant entre la couche de ceinture radialement la plus extérieure (2b) et le bandage de ceinture (3, 3₁, 3₂, 3₃, 3₄, 3₅), une section de passage radialement extérieure (8b) s'étendant sur le côté extérieur radial du bandage de ceinture (3, 3₁, 3₂, 3₃, 3₄, 3₅), qui est en contact avec l'élément de bande de roulement conducteur d'électricité (7), et au moins une section de passage (8c) réalisée dans la direction radiale entre des spires de bandage voisines (3a, 3c),
un passage conducteur d'électricité (2a, 2b, 8, 8₁, 8₂, 8₃, 8₄, 8₅) ou un élément de bande de roulement conducteur d'électricité (7) étant un tel passage ou élément qui présente une résistance électrique spécifique ≤ 10⁸ Ohm cm, le passage de matériau conducteur d'électricité (8, 8₁, 8₂, 8₃, 8₄, 8₅) présentent - dans le cas d'un bandage de ceinture (3, 3₁, 3₂, 3₄, 3₅) avec une seule couche de bandage (3', 3", 3"') par rapport à la seule couche de bandage (3', 3", 3"') et, dans le cas d'un bandage de ceinture (33) avec plusieurs couches de bandage (3'ₐ, 3'i) par rapport à chaque couche de bandage (3'ₐ, 3'ᵢ) - des sections de passage (8a, 8b, 8d) qui se superposent au moins par sections dans la direction radiale, qui sont séparées les unes des autres par un ou plusieurs enroulements de bandage (3a, 3c) de la ou des couches de bandage respectives (3', 3'ₐ, 3'ᵢ, 3", 3"'), qui sont reliées par une seule section de passage (8c) réalisée dans la direction radiale,
**caractérisé**
**en ce que** le bandage de ceinture (3₄, 3₅) est formé d'une seule couche de bandage (3"') enroulée en bardeaux, le passage de matériau conducteur d'électricité (8₄, 8₅), considéré dans la section transversale du pneu, présentant une forme en Z couchée ou étant réalisé par sections en forme de Z couché, de telle sorte que la section de passage radialement intérieure (8a) forme une barre transversale en Z, la section de passage radialement extérieure (8b) forme l'autre barre transversale en Z et la section de passage traversante (8c) forme la barre centrale en Z, la section de passage radialement intérieure (8a) et la section de passage radialement extérieure (8b) étant chacune en contact avec au moins deux, de préférence au moins trois, et de manière particulièrement préférée exactement trois sections d'extrémité (3a₁) des enroulements de bandage (3a) qui ne sont pas recouvertes d'un enroulement de bandage voisin (3a) sur exactement un côté.

3. Pneu de véhicule selon la revendication 1, **caractérisé en ce que** la section de passage radialement intérieure (8a), la section de passage radialement extérieure (8b) et la section de passage centrale (8d) sont adjacentes aux mêmes enroulements de bandage en forme de bandes (3a) voisins de chaque couche de bandage (3'a, 3'i), notamment à exactement deux enroulements de bandage en forme de bande voisins (3a) de chaque couche de bandage (3'a, 3'i).

4. Pneu de véhicule selon la revendication 2, **caractérisé en ce que** le passage de matériau conducteur d'électricité (8₅) est réalisé par sections en forme de Z couche et présente, considéré dans la coupe transversale du pneu, deux sections de passage supplémentaires (8e),
la section de passage supplémentaire (8e) étant en contact avec la section de passage radialement intérieure (8a) et l'autre section de passage supplémentaire (8e) étant en contact avec la section de passage radialement extérieure (8b), les sections de passage supplémentaires (8e) s'étendant sur différents côtés de la section de passage traversante (8c) formant la barre centrale en Z, étant séparées de celle-ci par l'enroulement de bandage (3a) adjacent respectif et se terminent dans la zone entre les enroulements de bandage (3a) voisins respectifs.

5. Pneu de véhicule selon l'une quelconque des revendications 1 à 4, **caractérisé en ce que** le passage de matériau conducteur d'électricité (8₃, 8₄, 8₅), considéré dans la section transversale du pneu, présente une largeur maximale (bₚ) déterminée dans la direction axiale de 5,0 mm à 40,0 mm, notamment de 10,0 mm à 20,0 mm.
